Europäisches Patentamt

European Patent Office

Office européen des brevets

(19)

(11) Publication number: **0 019 465**
**B1**

(12)

# EUROPEAN PATENT SPECIFICATION

(45) Date of publication of patent specification: **14.09.83**

(51) Int. Cl.³: **D 21 H 5/18, E 04 D 5/02**

(21) Application number: **80301591.6**

(22) Date of filing: **15.05.80**

(54) **High strength glass fiber mat particularly useful for roofing products, built-up roofing membranes and systems and method of making such products.**

| | |
|---|---|
| (30) Priority: **16.05.79 US 39577**<br>**16.05.79 US 39575**<br>**16.05.79 US 39578** | (73) Proprietor: **GAF CORPORATION**<br>**140 West 51st Street**<br>**New York New York 10020 (US)** |
| (43) Date of publication of application:<br>**26.11.80 Bulletin 80/24** | (72) Inventor: **Bondoc, Alfredo A.**<br>**209 Grant Avenue**<br>**Middlesex, New Jersey 08846 (US)**<br>Inventor: **Canfield, V. Robert**<br>**1783 Woodfield Road**<br>**Martinsville, New Jersey 08836 (US)**<br>Inventor: **Ziegler, B. Randall**<br>**91 Stokes Street**<br>**Freehold, New Jersey 07728 (US)** |
| (45) Publication of the grant of the patent:<br>**14.09.83 Bulletin 83/37** | |
| (84) Designated Contracting States:<br>**BE CH DE FR GB IT LI NL SE** | |
| | (74) Representative: **Ford, Michael Frederick et al,**<br>**MEWBURN ELLIS & CO. 2/3 Cursitor Street**<br>**London EC4A 1BQ (GB)** |
| (56) References cited:<br>**FR - A - 2 309 491**<br>**GB - A - 475 819**<br>**GB - A - 1 429 950** | |

Courier Press, Leamington Spa, England.

# High-strength glass fiber mat particularly useful for roofing products, built-up roofing membranes and systems and method of making such products

## Background of the invention

### 1. Field of the invention

This invention relates to glass fiber mats, and more particularly, to an improved, high-strength glass fiber mat which is particularly useful for roofing products, built up roofing membranes and systems using this mat, and to methods of making these products.

### 2. Description of the prior art

Roofing products which use glass fiber mats in place of organic felts require mats having high tensile strength and excellent flexibility properties. Built up roofing membranes and systems, especially, need mats which have excellent tear resistance. Unfortunately, the glass fiber mats of the prior art, which rely upon continuous strands or elongated, rod-like bundles of fibers as reinforcing agents, often are expensive and more difficult to make, and not possess these high-strength properties, particularly for built up roofing application. Such glass mats are described in a number of U.S. patents, including 3,634,054; 3,853,683; 4,112,174; 4,129,674; 4,135,022 and 4,135,029.

Therefore, it would be of considerable advantage to the roofing industry to provide a new and improved high-strength glass fiber mat which is adaptable for built up roofing membranes and systems, and which may be made by a simple, economical, wet-laid process using inexpensive, chopped bundles of glass fibers as the raw material for the mat.

Built-up roofing ("BUR") membranes and systems are used primarily on commercial buildings, and used to the substantial exclusion of other roofing types on large industrial buildings of low profile. Its popularity arises from its relatively low cost combined with its effectiveness as a weather repellant surface and its durability. The major drawback in its use is that very high strengths are required, substantially exceeding those of roofing shingles for residential construction. These rigid requirements arise because built up roofing systems are subject to severe stresses induced internally or externally by the surrounding atmosphere, including expansion caused by the presence of moisture internal to the system, and both expansion and contraction forces caused by variation in ambient temperature conditions. For these and other reasons, it is essential that built up roofing systems possess both excellent tear resistance and tensile strengths.

A built-up roofing system is conventionally constructed by (1) applying multiple layers or membranes which are parallel strips of asphalt impregnated felt in succession onto a rigid roof base, with appropriate overlapping at the joints between adjacent parallel strips used to form a single layer from rolls of the felt, and (2) covering each layer of felt in succession with a coating of fluid hot asphalt and adhesives onto which coating the succeeding layer of felt is applied and adhered before the hot asphalt has cooled to solid form. When the rigid deck for the roofing is a wooden material, for example plywood, it is customary to fasten the bottom layer of felt to the deck with suitable nails. When the deck is concrete, gypsum board, or other material unsuitable for nailing, a bottom coating of primer asphalt is applied thereto to fasten the bottom felt layer to the deck. The top layer of felt receives a final coating of asphalt which optionally is protected by a layer of loose aggregate embedded in and covering the asphalt.

In the past, most roofing products were made of organic rag felt impregnated with asphalt. However, organic felt is not fire-resistant and it is expensive to manufacture. Accordingly, the industry has looked to glass fiber mats to replace organic felts in this application. Prior art roofing products using glass fiber mats are described in U.S. patents 4,129,674; 4,135,022 and 4,135,029. Unfortunately, the built-up roofing products using such glass fiber mats of the prior art, which rely upon continuous strands or elongated, rod-like bundles of fibers as reinforcing agents, often are expensive and difficult to make, or do not possess the high strength properties, particularly desired for built-up roofing application.

GB—A—1429960 describes glass fiber mats containing twisted strands of glass fibers which are shown as uniform in thickness along their length. These strands are described as being made by intense agitation of a slurry and this patent states that a minimum content of 1% asbestos fiber is essential for the formation of these twisted strands.

Therefore, it is a feature of this invention to provide new and improved built-up roofing membranes and systems, which can be manufactured economically using high-strength glass fiber mats, and which satisfy the rigid standards required of such products. In particular, a feature of this invention is the provision of such products which possess a unique combination of tear resistance and tensile strength, and which can be manufactured using inexpensive raw materials at a rapid rate of production.

## Summary of the invention

What is provided herein is a glass fiber mat having a novel structure and high-strength properties which is particularly useful for roofing products, built up roofing membranes and systems, and a method of making the same products.

The glass mat fiber of the invention is comprised of two fibrous components, namely, individual filament glass fibers and extended glass fiber elements, which are formed *in situ* in a wet-laid process from original bundle of glass fibers. The individual filaments appear by conventional filamentation of the bundles. The extended fiber elements, however, are formed by longitudinal extension of a given bundle whose fibers are connected longitudinally. Thereby the effective length of a fiber element is very much greater than the length of the fibers therein. The fiber elements are further characterized by a non-uniform diameter, as contrasted to the fibers themselves, being thicker in the mid-section of the element where connection of fibers is maximized, and tapered toward its ends, where fiber connection is at a minimum. The individual fibers have a length of 40—80 mm.

The extended fiber elements preferably predominate by weight of the fibrous content of the mat over the individual filaments in a ratio of about 60% to 40% by weight of the total fibrous material in the mat. The desired ratio of the two components can be achieved by using bundles whose fibers have a long length, and by very gentle agitation of the dispersion slurry for a short period of time.

The high strength built-up roofing membranes and systems of the invention, which have unusual tear resistance, utilize the improved glass fiber mats in place of organic felts. The BUR products of the invention are characterized particularly by their excellent tensile strength and economy of manufacture, as compared to other commercially available products of similar construction.

The individual filaments in the mat structure provide the quality of uniform denseness in the mat necessary for efficient impregnation of saturant asphalt into the interstices of the mat to form the BUR membrane. The extended fiber elements contribute substantially to the high-strength properties of the mat.

The BUR membranes are fabricated by impregnation of the mat with saturant asphalt. The built-up roofing systems of the invention, for example, 3-ply BUR systems, are made from multiple layers of such membranes which are held together by coatings of asphaltic adhesive.

Brief description of the drawings

Figure 1 is an illustration of a novel high-strength glass fiber mat of the invention.

Figure 2 is a schematic representation of the formation in a wet-laid process of the two fibrous components of the glass mat of the invention.

Figure 3 illustrates a built up roofing membrane of the invention.

Figure 4 shows a typical 3-ply composite built up roofing system of the invention.

Detailed description

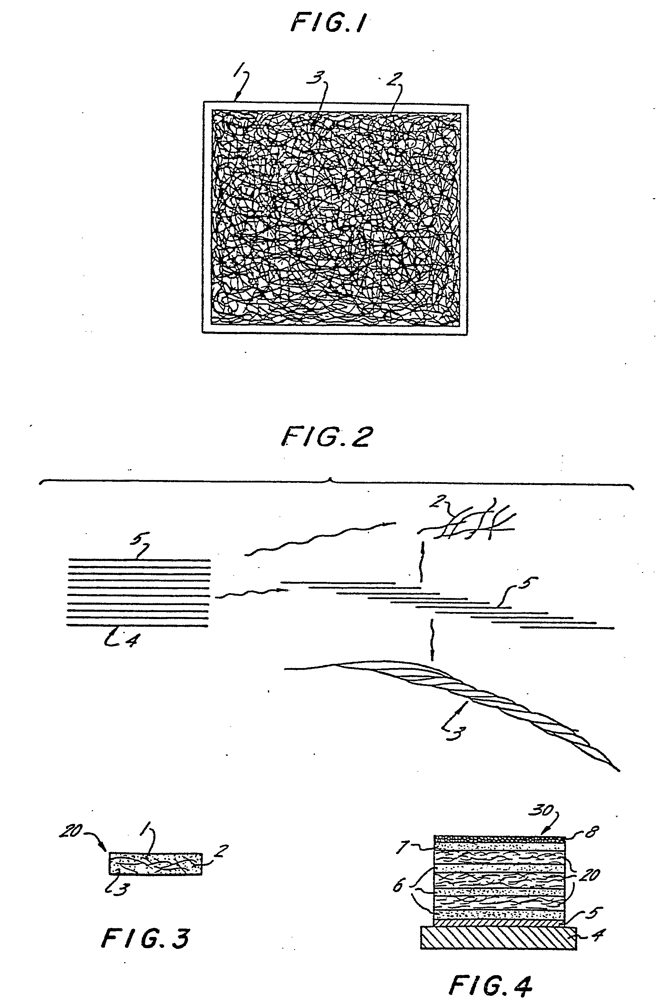

Turning now to the drawings, and particularly to Figure 1, a novel high-strength glass fiber mat structure embodying the invention is shown and it is generally designated by reference numeral 1. The mat is comprised of two fibrous components namely, a plurality of individual glass filaments fibers 2 and a plurality of extended glass fiber elements 3, both of which are substantially randomly oriented and uniformly dispersed throughout the mat. A binder substance (not shown) is provided to hold the fibrous materials together.

Figure 2 illustrates schematically the manner of formation in a wet-laid process of the two fibrous components of the glass mat of the invention. In this process chopped bundles 4 of glass fibers of rather long length (described later) are added to an aqueous solution of a suitable dispersant in a mixing tank. Each bundle contains many fibers 5, often between 20 to 300 fibers, or more, per bundle. The fibers in these bundles may be sized or unsized, wet or dry, as long as they can be suitably dispersed in the aqueous dispersant medium.

In the wet-laid process of the invention, chopped bundles of glass fibers of rather long length (described later) are added to an aqueous solution of a suitable dispersant in a mixing tank, each bundle contains many fibers, often between 20 to 300, or more, fibers per bundle. The fibers in these bundles may be sized or unsized, wet or dry, as long as they can be suitably dispersed in the aqueous dispersant medium.

The mixture of fiber bundles in the aqueous dispersement medium then is agitated very gently to form a diluted fiber slurry of selected consistency. During this agitation, some of the fibers in the bundles become filamentized, i.e. form individual filaments. The remaining fibers in a partially filamentized bundle (or fibers in an original unfilamentized bundle) then slide apart and become connected longitudinally to form an extended glass fiber element. These fiber elements thereby have an effective length which exceeds that of the fibers themselves within the element. The diameter, of a fiber element, also is non-uniform, as contrasted to the fibers therein, being greater in the middle portion thereof, where connection of fibers is greatest, than at its ends where connection of fibers is at a minimum. Thus the fiber elements taper outwardly from the middle towards each end portion thereof.

A single source of fiber bundles having the same physical and chemical properties, including length, diameter, sizing, electrical characteristics, etc. may be used in the process of forming the glass mats of the invention. Less preferably, however, bundles with fibers of differing dimensions may be used. The feature of being able to use one starting material makes the process very economical.

The extended fiber elements of the glass mat contribute substantially to the high-strength properties of the mat while the individual filaments provide the uniform denseness necessary for impregnation of asphalt in the manufacture of roofing products. Accordingly, the individual filaments suitably are present in the glass mat in an amount of about 20% to 60% by weight of the total fibrous material, while the extended fiber elements comprise about 40% to 80%. Preferably, however, the individual filaments comprise only about 30% to 50% by weight of the mat and the fiber elements about 50% to 70%. In the best mode, the individual filaments constitute 40% and the extended fiber elements predominate at about 60% of the mat.

The glass fibers in the bundles are selected to have a relatively long length, suitably, about 1-3/4 to 3 inches (44—77 mm), preferably about 2 to 2-1/2 inches, (50—65 mm) and optionally, 2-1/4 inches (57 mm) in length. The use of longer fibers provides more fiber elements in the mat at the expense of individual filaments for a given degree of agitation. The diameter of the fibers is not a critical parameter. For practical reasons, however, commercial fibers have a diameter of about 8 to 20 $\mu$m, and, preferably about 12 to 19 $\mu$m are used.

Mild agitation of the dispersion slurry for short periods of time favors the formation of the desired ratio of individual filaments to extended fiber elements. Clearly, the intense agitation normally employed in wet-laid processes for making uniform glass mats is not used here. Such agitation forms highly filamentized glass mats from fiber bundles which do not contain the substantial amount of fiber elements which are an essential part of the mat of this invention. However, conventional mixing equipment using propellor driven stirrers may be utilized as long as agitation is carried out at relatively low propeller speeds and for short periods of time. Usually, for a 4 liter slurry, which is used to make hand sheets, for example, about 1.5 watt-hour of energy is applied for each 5 minutes of agitation. Usually agitation is continued for less than 30 minutes, and preferably for only about 5 to 15 minutes. In commercial equipment, mild agitation for short periods of time is used also. The process preferably is run in a continuous manner, rather than in a batch operation.

Any suitable dispersant material may be used to form the fiber dispersion slurry. Many such dispersants are known in the art and are available for this purpose. However, a particularly useful dispersant is a tertiary amine oxide, such as Aromox DMHT, which is dimethyl hydrogenated tallow amine oxide, sold by Armak Chemical Co. this dispersant suitably is used in a concentration of about 2 to 100 ppm, preferably about 5 to 30 ppm, and, optimally, about 10 ppm, of the fiber slurry.

The dispersion slurry suitably is maintained at a dispersion consistency of about 0.1 to 2% by weight of the fibers in the slurry, preferably about 0.2 to 1%, and, optimally, about 0.5%. As in the usual wet-laid processes, the concentrated dispersion slurry is diluted with water before being applied to the mat-forming screen. Preferably the dispersion slurry is diluted about 5 to 25 times at the screen, and, optimally, about 10 times. Generally, higher dispersion and formation consistencies favor generation of extended fiber elements at the expense of individual filaments.

The glass mat thus-formed then is provided with a suitable binder to hold the fibrous components together. Any commercially available binder may be used, such as urea-formaldehyde or phenol-formaldehyde resins. The binder usually is applied in an amount of about 3 to 45% by weight of the finished mat, preferably about 10 to 30%, and, optimally, about 15 to 25%. Generally, too much binder decreases the porosity of the mat to an unsuitable condition, whereas too little binder diminishes the integrity of the mat unreasonably.

Suitably the basis weight of the finished mat (with binder) should be at least 1 lb/100 sq. ft. (49 g/m²), and, preferably, about 2.0 to 3.0 lbs/100 sq.ft. (98 to 149 g/m²).

The glass mats of the invention also are characterized by very high-strength properties. Generally, the mats have an Elmendorf tear strength of about 8 Newtons at a basis weight of 98 g/m². In application in three-ply asphaltic built up roofing systems, such mats provide products having a tensile strength of about 235 lbs/inch (CMD) at 0°F. (2065 N/m at −18°C).

Referring now to Figure 3, there is shown the built up roofing membrane of the invention, referred to as 20. The membrane includes the glass mat containing individual filaments 1 and extended elements 2 as a felt material. The mat is impregnated with saturant asphalt 3 in rolled-up sheets.

Figure 4 shows a typical built up roofing system of the invention. The embodiment illustrated is a 3-ply system, generally indicated by reference numeral 30. The system is secured to a roof deck 4 covered by appropriate insulation 5 (optional) by means of an asphaltic adhesive coating 6. The successive membranes also are adhered to each other with additional coatings 6. The top membrane is covered with a coating asphalt layer 7 which may include therein aggregate material 8.

The following examples will further illustrate the invention.

Preparation of glass mat
A. Laboratory equipment
Example 1

A quantity of sized wet chopped strand fiber, 50 mm in length, 16 mm in diameter, weighing 3 g on a dry basis, was added to 4 l of water containing 20 ppm of Aromox DMHT. The resulting slurry was agitated with a Lightning mixer equipped with a suitable propeller type stirrer set at about 400 rmp for periods of 5, 10 and 20 minutes. The thus-agitated dispersion slurry composition then was drained through a wire mesh upon which the glass mat was formed. After drying, a urea-formaldehyde binder was applied to form a finished mat having a basis weight of 98 g/m². The resultant glass mat hand sheets had 20%, 35% and 55% individual filaments, and 80%, 65% and 45% extended fiber elements for the 5, 10 and 20 minutes of agitation, respectively.

B. Commerical equipment
Example 2

60 kg of K filament, sized, wet chopped strand, 50 mm glass fibers were fed into an 80 cubic meter tank filled with an aqueous solution containing 10 ppm of Aromox DMHT. The filter consistency in the stock solution was 0.4%. The tank was cylindrical, upright, having a diameter of 5 meters, and was equipped with a side entering 3-blade propellor agitator. The blades had a variable slope angle normally set at about 15° to 18°, circular in shape, being about 200 to 250 mm at the widest point and having rounded, dull edges. The propeller measured about 1300 mm in diameter and was mounted on a shaft about 200 to 250 mm in diameter, driven by a motor at about 80 to 120 rpm. The stock was agitated for about 5 minutes; the energy input was about 0.6 kWh for this period of agitation.

The agitated stock then was pumped to a mat-forming machine. Enroute the stock was diluted in a tank with water containing 10 ppm of Aromox DMHT to a formation consistency of 0.04%. Thereafter the mat thus-formed was impregnated with a urea-formaldehyde binder, dried and cured. The resultant mat contains about 20% binder and 80% fibrous material having a basis weight of 100 g/m². The fibrous components of the mat comprises about 60% by weight of extended fiber elements and about 40% by weight of substantially individual filaments.

The process described above was run continuously by feeding fiber bundles at a rate of 60 kg per minute. The average residence time of the fibers in the tank was about 5 minutes. Water removed at the mat-forming machine was recycled to the dilution tank (9 parts) and to the mixing tank (1 part). Thus, the process was operated in a closed loop, continous manner.

Preparation of built up roofing membrane
A. Laboratory equipment
Example 3

A quantity of sized, wet chopped strand fiber, 50 mm in length, 16 mm in diameter, weighing 3 g on a dry basis, was added to 4 l of water containing 20 ppm of Aromox DMHT. The resulting slurry was agitated with a Lightning mixer equipped with a propeller type stirrer set at about 400 rpm for periods of 5, 10 and 20 minutes. The thus-agitated dispersion slurry composition then was strained through a wire mesh upon which the glass mat was formed. After drying, a urea-formaldehyde binder was applied to form a finished mat having a basis weight of 98 g/m². The mat thus-formed with 5 minutes of agitation was comprised of about 40% filament fibers and 60% of extended fiber elements, by weight of the total fibrous material in the mat, the tear strength of this mat was 8 Newtons (CMD) at −18°C (Elmendorf Standard).

The above formed mat was impregnated with saturant asphalt to provide a built up roofing membrane having excellent high-strength properties.

B. Commercial equipment
Example 4

The method of Example 2 was followed to provide a suitable glass mat. The mat then was impregnated with saturant asphalt to provide a built up roofing membrane having excellent physical properties.

Preparation of 3-ply built up roofing system
Example 5

The membranes of Example 4 were unrolled and asphaltic adhesive material was applied between successive membrane layers. The tensile strength of this system was 2056 N/m (CMD) at −18°C at a mat basis weight of 98 g/m², which is an unusually high tensile strength for such a system. By comparison, similar commercial systems using discrete fiber glass mats exhibited tensile strengths in the range of only about 1177 to 1555 N/m.

**Claims**

1. A high-strength glass fiber mat useful for roofing products which is formed by the wet-laid process, said fibers having a length of 40 to 80 mm and a diameter of 8 to 20 $\mu$m, comprising:

a) individual filament glass fibers comprising 20% to 60% by weight of the fibrous material in said mat,

b) extended glass fiber elements comprised of longitudinally connected fibers said elements there having a length which is greater than the length of the fibers in said element, and a diameter which is non-uniform, being greater in the mid-portion thereof than at its ends, said elements comprising 40% to 80% by weight of the fibrous material in said mat,

both said individual filament fibers and said extended fiber elements being substantially randomly oriented and uniformly dispersed throughout said material, and,

c) a binder substance to hold said fibrous material together,

all of the fibers in the mat being glass fibers.

2. A glass fiber mat according to Claim 1 wherein said individual filaments comprise 30% to 50%, and said extended fiber elements 50% to 70%, by weight of the fibrous material in said mat.

3. A glass fiber mat according to Claim 1 wherein said individual filaments comprise about 40%, and said extended fiber elements about 60%, by weight of the fibrous material in said mat.

4. A glass fiber mat according to any one of the preceding Claims wherein the fibers have a length of 50 to 65 mm.

5. A glass fiber mat according to any one of the preceding Claims wherein said binder substance constitutes 10% to 40% by weight of said mat.

6. A glass fiber mat according to any one of the preceding Claims wherein the basis weight of said mat is at least 49 g/m².

7. A glass fiber mat according to any one of the preceding Claims wherein the basis weight of said mat is 98 to 149 g/m² of said mat.

8. A glass fiber mat according to any one of the preceding Claims where fibers of similar length and diameter are present in both said individual filaments and extended fiber elements.

9. A high-strength built-up roofing membrane comprising:

a) a high-strength glass fiber mat as defined in any one of the preceding Claims, and
b) saturant asphalt impregnated in said mat.

10. A built-up roofing system comprising:

a) multiple plies of said high-strength built-up roofing membranes as defined in Claim 9, and
b) adhesive asphaltic coatings between said membranes.

11. A system according to Claim 10 having three membranes.

12. A system according to Claim 10 or Claim 11 in which the bottom membrane is secured to a roof deck with an additional adhesive asphaltic coating.

13. A system according to Claim 12 further characterized by including the top membrane a top coating of asphalt.

14. A system according to Claim 13 in which said top coating of asphalt includes an aggregate material therein.

15. A system according to Claim 11 having a tensile strength (CMD at −18°C) of about 2050 N/m at a glass mat basis weight of 98 g/m².

16. A method of making high-strength glass fiber mats comprising individual filament glass fibers comprising 20% to 60% by weight of the fibrous material in said mat, and extended glass fiber elements comprised of longitudinally connected fibers said elements there having a length which is greater than the length of the fibers in said element, and a diameter which is non-uniform being greater in the mid-portion thereof than at its ends, said elements comprising 40% to 80% by weight of the fibrous material in said mat, all of the fibers in the mat being glass, with both said individual filament fibers and said extended fiber elements being substantially randomly oriented and uniformly dispersed throughout said material, and having a binder substance therein to hold said fibrous material together which comprises the steps of:

a) forming an aqueous slurry of bundles of glass fiber having a length of 40—80 mm and a diameter of 8 to 20 $\mu$m in a dispersant medium,
b) gently agitating said slurry to disperse said bundles into said individual filaments and extended fiber elements,
c) passing said thus agitated dispersion slurry onto a mat-forming screen to form said fibrous mat and removing water therefrom and
d) applying a binder to said mat.

17. A method according to Claim 16 wherein said individual filaments comprise 30% to 50%, and said extended fiber elements 50% to 70%, by weight of the fibrous material in said mat.

18. A method according to Claim 16 wherein said individual filaments comprise 40%, and said extended fiber elements 60%, by weight of the fibrous material in said mat.

19. A method according to any one of Claims 16 to 18 wherein the fibers in said bundles have a length of 50—65 mm.

20. A method according to any one of Claims 16 to 19 wherein a single source of bundles are used containing fibers having same length and diameter.

21. A method according to any one of Claims 16 to 20 wherein the dispersant is present in an amount of 2 to 100 ppm of said slurry.

22. A method according to Claim 21 wherein said dispersant is present in an amount of 5 to 30 ppm.

23. A method according to Claim 21 or 22 wherein said dispersant is a tertiary amine oxide.

24. A method according to any one of Claims 16 to 23 wherein the fiber slurry consistency is 0.1 to 2% by weight of the fibers.

25. A method according to Claim 24 wherein said fiber consistency is 0.2 to 1%.

26. A method according to Claim 24 or Claim 25 wherein said fiber consistency is diluted 5 to 25 at the screen.

27. A method according to any one of Claims 16 to 26 wherein said process is run continuously, with fiber bundles being fed at a uniform rate to form the fiber slurry, and water which is removed from said screen being recycled both for dilution water and for formation of the aqueous slurry.

28. A method according to any one of Claims 16 to 27 wherein residence time of said fibers during agitation is about 5 minutes.

29. A method according to Claim 28 in which the energy input is about 0.6 kWh for 5 minutes of agitation of an 80 m³ slurry.

## Patentansprüche

1. Hochfeste Glasfasermatte zur Verwendung als Bedachungsmaterial, die im Naßauflegeverfahren hergestellt ist, wobei die Fasern eine Länge von 40 bis 80 mm und einen Durchmesser von 8 bis 20 $\mu$m aufweisen, gekennzeichnet durch

a) einzelne Glasfasern, deren Anteil am Fasermaterial der Matte 20 bis 60 Gewichtsprozent beträgt,

b) ausgebreitete Glasfaserelemente, bestehend aus in Längsrichtung verbundenen Fasern, wobei die Faserelemente dort eine Länge haben, die grösser ist als die Länge der Fasern in dem Element, und einen ungleichförmigen Durchmesser aufweisen, der im mittleren Bereich größer ist als an den Enden des Elements, und wobei diese Elemente einen Anteil von 40 bis 80 Gewichtsprozent an dem Fasermaterial der Matte haben, wobei sowohl die Einzelfasern als auch die ausgebreiteten Faserelemente im wesentlichen zufällig orientiert und über das Material gleichförmig verteilt sind, und

c) ein Bindemittel zum Zusammenhalten des Fasermaterials, wobei alle Fasern der Matte Glasfasern sind.

2. Glasfasermatte nach Anspruch 1, dadurch gekennzeichnet, daß der Anteil der Einzelfasern 30 bis 50% und der Anteil der ausgebreiteten Glasfaserelemente 50 bis 70% vom Gewicht des Fasermaterials der Matte beträgt.

3. Glasfasermatte nach Anspruch 1, dadurch gekennzeichnet, daß der Anteil der einzelnen Fasern ungefähr 40% und der Anteil der ausgebreiteten Glasfaserelemente ungefähr 60% am Gewicht des Fasermaterials der Matte beträgt.

4. Glasfasermatte nach einem der vorhergehenden Ansprüche, dadurch gekennzeichnet, daß die Fasern eine Länge von 50 bis 65 mm haben.

5. Glasfasermatte nach einem der vorhergehenden Ansprüche, dadurch gekennzeichnet, daß das Bindemittel 10 bis 40% des Gewichts der Matte ausmacht.

6. Glasfasermatte nach einem der vorhergehenden Ansprüche, dadurch gekennzeichnet, daß das Grundgewicht der Matte mindestens 49 g/m² beträgt.

7. Glasfasermatte nach einem der vorhergehenden Ansprüche, dadurch gekennzeichnet, daß das Grundgewicht der Matte 98 bis 149 g/m² beträgt.

8. Glasfasermatte nach einem der vorhergehenden Ansprüche, dadurch gekennzeichnet, daß Fasern mit ähnlicher Länge und ähnlichem Durchmesser sowohl bei den Einzelfasern als auch bei den ausgedehnten Glasfaserelementen vorhanden sind.

9. Hochfeste, mehrsichtige Dachhaut, gekennzeichnet durch

a) eine hochfeste Glasfasermatte nach einem der vorhergehenden Ansprüche und

b) einen Sättigungsasphalt, mit dem die Matte imprägniert ist.

10. Mehrschichtiges Bedachungssystem, gekennzeichnet durch

a) mehrere Lagen aus der hochfesten, mehrschichtigen Dachhaut nach Anspruch 9, und

b) klebrige Asphaltschichten zwischen den Häuten.

11. System nach Anspruch 10, gekennzeichnet durch drei Häute.

12. System nach Anspruch 10 oder 11, dadurch gekennzeichnet, daß die unterste Haut mit einer zusätzlichen klebrigen Asphaltschicht an einer Dachfläche befestigt ist.

13. System nach Anspruch 12, dadurch gekennzeichnet, daß die oberste Haut mit Asphalt beschichtet ist.

14. System nach Anspruch 13, dadurch gekennzeichnet, daß die obere Asphaltschicht einen Zuschlagstoff enthält.

15. System nach Anspruch 11, gekennzeichnet durch eine Zugfestigkeit (CMD bei —18°C) von ungefähr 2050 N/m bei einem Grundgewicht der Glasfasermatte von 98 g/m².

16. Verfahren zur Herstellung einer hochfesten Glasfasermatte, bestehend aus einzelnen Glasfasern, deren Anteil 20 bis 60% am Gewicht des Fasermaterials der Matte beträgt, und ausgebreiteten Glasfaserelementen, die aus in Längsrichtung verbundenen Faser bestehen, wobei die Elemente dort eine Länge haben, die größer ist als die Länge der Fasern in dem Element, und einen ungleichmässigen Durchmesser haben, der in ihrem mittleren Bereich größer ist als an ihren Enden, wobei die Elemente 40 bis 80 Gewichtsprozent des Fasermaterials der Matte enthalten, wobei alle Fasern in der Matte Glasfasern sind, wobei sowohl die einzelnen Fasern als auch die ausgebreiteten Faserelemente in dem gesamten Material in wesentlichen willkürlich orientiert und gleichförmig verteilt sind, und mit einem Bindmittel, welches das Fasermaterial zusammenhält, gekennzeichnet durch

a) Ausbilden eines wässrigen Schlammes aus Bündeln von Glasfasern mit einer Länge von 40 bis 80 mm und einem Durchmesser von 8 bis 20 $\mu$m in einem verteilenden Medium,

b) sanftes Verrühren des Schlammes zum Zerteilen der Bündel in die einzelnen Fasern und verteilte Faserelemente,

c) Aufbringen des verrührten Dispersionsschlammes auf ein Mattenbildungssieb, um die Fasermatte auszubilden und das Wasser zu beseitigen, und

d) Aufbringen eines Bindemittels auf die Matte.

17. Verfahren nach Anspruch 16, dadurch gekennzeichnet, daß der Anteil der einzelnen Fasern 30 bis 50% und der Anteil der ausgebreiteten Glasfaserelemente 50 bis 70% des Gewichts des Fasermaterials in der Matte beträgt.

18. Verfahren nach Anspruch 16, dadurch gekennzeichnet, daß der Anteil der einzelnen Fasern 40% und der Anteil der ausgebreiteten Faserelemente 60% des Gewichts des Fasermaterials in der Matte beträgt.

19. Verfahren nach einem der Ansprüche 16 bis 18, dadurch gekennzeichnet, daß die Fasern in den Bündeln eine Länge von 50 bis 65 mm haben.

20. Verfahren nach einem der Ansprüche 16 bis 19, dadurch gekennzeichnet, daß eine einzige Quelle von Bündeln benutzt wird, die Fasern von einheitlicher Länge und einheitlichem Durchmesser enthalten.

21. Verfahren nach einem der Ansprüche 16 bis 20, dadurch gekennzeichnet, daß in dem Schlamm eine Menge von 2 bis 100 ppm des Verteilungsmediums vorhanden ist.

22. Verfahren nach Anspruch 21, dadurch gekennzeichnet, daß eine Menge von 5 bis 30 ppm des Verteilungsmediums vorhanden ist.

23. Verfahren nach Anspruch 21 oder 22, dadurch gekennzeichnet, daß das Verteilungsmedium ein tertiäres Aminooxid ist.

24. Verfahren nach einem der Ansprüche 16 bis 23, dadurch gekennzeichnet, daß die Faser schlammkonsistenz 0,1 bis 2 Gewichtsprozent der Fasern beträgt.

25. Verfahren nach Anspruch 24, dadurch gekennzeichnet, daß die Faserkonsistenz 0,2 bis 1% beträgt.

26. Verfahren nach Anspruch 24 oder 25, dadurch gekennzeichnet, daß die Faserkonsistenz am Sieb 5 bis 25 fach verdünnt ist.

27. Verfahren nach einem der Ansprüche 16 bis 26, dadurch gekennzeichnet, daß der Vorgang kontinuierlich abläuft, wobei die Faserbündel zur Bildung des Faserschlammes mit einer gleichförmigen Geschwindigkeit zugeführt werden und wobei das vom Sieb beseitigte Wasser sowohl als Verdünnungswasser und zur Ausbildung des wässrigen Schammes erneut zugeführt wird.

28. Verfahren nach einem der Ansprüche 16 bis 27, dadurch gekennzeichnet, daß die Verweilzeit der Fasern während des Verrührens ungefähr 5 Minuten beträgt.

29. Verfahren nach Anspruch 28, dadurch gekennzeichnet, daß der Energieaufwand für 80 m³ Schlamm bei einer Umrührdauer von 5 Minuten ungefähr 0,6 kWh beträgt.

**Revendications**

1. Feutre de fibres de verre, de résistance mécanique élevée, utile dans des produits pour toitures et formé par un procédé de dépôt de type humide, les fibres ayant une longueur d'environ 40 à 80 mm et un diamètre de 8 à 20 microns, caractérisé en ce qu'il comprend:

a) des fibres de verre sous forme de filaments individuels formant 20 à 60% en poids de la matière fibreuse du feutre,

b) des élémentes étendus de fibres de verre formés de fibres connectées longitudinalement, ces éléments ayant une longueur supérieure à celle des fibres contenues dans l'élément et un diamètre qui n'est pas uniforme, ce diamètre étant plus grand dans la partie médiane que vers les extrémités, les éléments formant 40 à 80% du poids de la matière fibreuse présente dans le feutre, les fibres sous forme de filaments individuels et les éléments fibreux étendus ayant une orientation pratiquement aléatoire et étant dispersés uniformément dans la matière, et

c) une substance formant liant destinée à maintenir la matière fibreuse sous forme cohérente, toutes les fibres du feutre étant des fibres de verre.

2. Feutre de fibres de verre selon la revendication 1, caractérisé en ce que les filaments individuels forment 30 à 50% et les éléments fibreux étendus 50 à 70% du poids de la matière fibreuse du feutre.

3. Feutre de fibres de verre selon la revendication 1, caractérisé en ce que les filaments individuels forment environ 40% et les éléments fibreux étendus environ 60% du poids de la matière fibreuse du feutre.

4. Feutre de fibres de verre selon l'une quelconque des revendications précédentes, caractérisé en ce que les fibres ont une longueur de 50 à 65 mm.

5. Feutre de fibres de verre selon l'une quelconque des revendications précédentes, caractérisé en ce que la substance formant liant forme 10 à 40% du poids du feutre.

6. Feutre de fibres de verre selon l'une quelconque des revendications précédentes, caractérisé en ce que la masse surfacique du feutre est d'au moins 49 m/m².

7. Feutre de fibres de verre selon l'une quelconque des revendications précédentes, caractérisé en ce que la masse surfacique du feutre est de 98 à 148 g/m² du feutre.

8. Feutre de fibres de verre selon l'une quelconque des revendications précédentes, caractérisé en ce que des fibres de longueur et de diamètre similaires sont présentes à la fois dans les filaments individuels et dans les éléments fibreux étendus.

9. Membrane multicouche pour toiture ayant une résistance élevée, caractérisée en ce qu'elle comprend:

a) un feutre de fibres de verre de résistance mécanique élevée selon l'une quelconque des revendications précédentes, et

b) un asphalte d'imprégnation qui imprègne le feutre.

10. Système multicouche pouir toiture, caractérisé en ce qu'il comprend:

a) plusieurs couches des membranes multi-couches pour toiture de résistance élevée selon la revendication 9, et

b) des revêtements asphaltiques adhésifs placés entre le membranes.

11. Système selon la revendication 10, caractérisé en ce qu'il comporte trois membranes.

12. Système selon l'une des revendications 10 et 11 caractérisé en ce que la membrane inférieure est fixée à un support de toit par une couche asphaltique adhésive supplémentaire.

13. Système selon la revendication 12, caractérisé en ce qu'il comprend en outre, sur la membrane supérieure, une couche supérieure d'asphalte.

14. Système selon la revendication 13, caractérisé en ce que la couche supérieure d'asphalte contient une matière d'aggrégat.

15. Système selon la revendication 11, caractérisé en ce qu'il a une résistance à la traction (CMD à −18°C) d'environ 2 050 N/m pour une masse surfacique de feutre de verre de 98 g/m².

16. Procédé de fabrication de feutres de fibres de verre de résistance mécanique élevée, contenant des fibres de verre sous forme de filaments individuels constituant 20 à 60% du poids de la matière fibreuse du feutre, et des éléments étendus de fibres de verre formés de fibres connectées longitudinalement, ces éléments ayant une longueur supérieure à celle des fibres qu'ils contienent et un diamètre qui n'est pas uniforme car il est plus grand dans la partie médiane qu'aux extrémités, les éléments formant 40 à 80% du poids de la matière fibreuse dans le feutre, toutes les fibres du feutre étant formées de verre, les fibres des filaments individuels et les éléments fibreux étendus ayant une orientation pratiquement aléatoire et étant dispersés uniformément dans la matière, et ayant une substance formant liant contenue afin qu'elle maintienne la cohérence de la matière fibreuse, caractérisé en ce qu'il comprend les opérations de:

a) formation d'une suspension aqueuse de faisceaux de fibres de verre ayant une longueur de 40 à 80 mm et un diamètre de 8 à 20 microns dans un fluide dispersant,

b) agitation douce de la suspension afin que les faisceaux soient soient dispersés en filaments individuels et éléments fibreux étendus,

c) passage de la suspension ainsi agitée sur une grille de formation d'une feutre afin que le feutre fibreux soit formé et que l'eau en soit retirée, et

d) application d'un liant au feutre.

17. Procédé selon la revendication 16, caractérisé en ce que les filaments individuels forment 30 à 50% et les éléments fibreux étendus 50 à 70% du poids de la matière fibreuse dans le feutre.

18. Procédé selon la revendication 16, caractérisé en ce que les filaments individuels forment 40% et les éléments fibreux étendus 60% du poids de la matière fibreuse du feutre.

19. Procédé selon l'une quelconque des revendications 16 à 18, caractérisé en ce que les fibres des faisceaux ont une longueur de 50 à 65 mm.

20. Procédé selon l'une quelconque des revendications 16 à 19, caractérisé en ce qu'une seule source de faisceaux est utilisée et contient des fibres ayant la même longueur et le même diamètre.

21. Procédé selon l'une quelconque des revendications 16 à 20, caractérisé en ce que l'agent dispersant est présent en quantité comprise entre 2 et 100 ppm dans la suspension.

22. Procédé selon la revendication 21, caractérisé en ce que l'agent dispersant est présent en quantité comprise entre 5 et 30 ppm.

23. Procédé selon l'une des revendications 21 et 22, caractérisé en ce que l'agent dispersant est un oxyde d'amine tertiaire.

24. Procédé selon l'une quelconque des revendications 16 à 23, caractérisé en ce que la consistance de la suspension de fibres est de 0,1 à 2% en poids de fibres.

25. Procédé selon la revendication 24, caractérisé en ce que la consistance des fibres est comprise entre 0,2 et 1%.

26. Procédé selon l'une des revendications 24 et 25, caractérisé en ce que la consistance des fibres est réduite par dilution de 5 à 25 fois au niveau de la grille.

27. Procédé selon l'une quelconque des revendications 16 à 26, caractérisé en ce que le procédé est mis en oeuvre de façon continue, les faisceaux de fibres étant transmis avec un débit uniforme afin qu'ils forment la suspension de fibres, et l'eau qui est retirée de la grille étant recyclée à la fois afin qu'elle forme l'eau de dilution et la suspension aqueuse.

28. Procédé selon l'une quelconque des revendications 16 à 27, caractérisé en ce que le temps de séjour des fibres pendant l'agitation est d'environ 5 min.

29. Procédé selon la revendication 28, caractérisé en ce que la quantité d'énergie fournie est d'environ 0,6 kWh pour 5 min d'agitation d'une suspension de 80 m³.

## FIG.1

## FIG.2

## FIG.3

## FIG.4

1